# EUROPEAN PATENT APPLICATION

(11) **EP 4 567 483 A1**
(43) Date of publication of application: **11.06.2025**
(21) Application number: 24208893.8
(22) Date of filing: 25.10.2024
(51) Int. Cl.: G02B 6/38, B08B 1/14

(54) **CLEANING ASSEMBLY, CLEANING SYSTEM AND METHOD**

(30) Priority: 08.12.2023 US 202318533250
(71) Applicant: INTEL Corporation, Santa Clara, CA 95054 (US)
(72) Inventor: SCHROEDER, Michael, Chandler, AZ 85226 (US); COONS, Todd, Gilbert, AZ 85297 (US); ZHANG, Kehai, Chandler, AZ 85226 (US); DELFIN MANRIQUEZ, Diego, Gilbert, AZ 85298 (US); STENBERG, Jensen, Phoenix, AZ 85044 (US)
(74) Representative: Viering, Jentschura & Partner mbB Patent- und Rechtsanwälte

(57) **Abstract**

Various aspects may provide a cleaning assembly having a mounting frame configured to be linked with a connector-holding arrangement. The cleaning assembly may further include a displaceable member configured to support a cleaning element thereon. The displaceable member may be operatively coupled to the mounting frame in a manner so as to be displaceable relative to the mounting frame, along a movement axis, between a first position and a second position of the displaceable member. In the first position of the displaceable member, the displaceable member may be apart from a cleaning-axis of the cleaning assembly. The cleaning-axis may be non-parallel to the movement axis and, with the mounting frame linked with the connector-holding arrangement, the cleaning-axis may be aligned with a connector-alignment-axis of the connector-holding arrangement. In the second position of the displaceable member, the displaceable member may intersect the cleaning-axis.

## Description

### Statement of government interest

This Invention was made with Government support under Agreement No. N00164-19-9-0001, awarded by NSWC Crane Division. The Government has certain rights in the Invention.

### Background

Within the domain of fiber optic technology, ensuring smooth and dependable data transmission heavily relies on inspecting and cleaning fiber optic connectors.

The rise of advanced optical packages and testing procedures has introduced a new challenge. It has become increasingly necessary to perform fiber optic cleaning during sorting and testing operations to prevent the onset of defects that may compromise performance quality. These defects not only have the potential to lead to performance losses, but may also result in permanent damage to the connectors.

Traditionally, cleaning fiber optic connectors has been accomplished through manual means, requiring an operator's presence and involvement. The operator undertakes the responsibility of executing the cleaning sequence. However, this manual approach presents various difficulties.

Accordingly, there is a need for an apparatus and/or method that can enhance the efficiency of the fiber optic connector cleaning process.

### Brief description of the drawings

In the drawings, like reference characters generally refer to the same parts throughout the different views. The drawings are not necessarily to scale, emphasis instead generally being placed upon illustrating the principles of the present disclosure. In the following description, various aspects are described with reference to the following drawings, in which:
FIG. 1A is a schematic diagram of a cleaning assembly, with a displaceable member of the cleaning assembly in a first position, according to various aspects;
FIG. 1B is a schematic diagram of the cleaning assembly of FIG. 1A, with the displaceable member of the cleaning assembly in a second position, according to various aspects;
FIG. 1C is a schematic diagram of the cleaning assembly of FIG. 1A, depicting movement of a cleaning element relative to a connector, while the displaceable member of the cleaning assembly is in the second position, according to various aspects;
FIG. 1D depicts the displaceable member pivoted about a pivot axis, according to various aspects;
FIG. 2A is a perspective view of a cleaning assembly, which includes a material-dispensing unit and a material-collecting unit, according to various aspects;
FIG. 2B is another perspective view of the cleaning assembly of FIG. 2A, with a displaceable member of the cleaning assembly in a first position, according to various aspects;
FIG. 2C is a perspective view of the cleaning assembly of FIG. 2A, with the displaceable member of the cleaning assembly in a second position and being provided with a cleaning element, according to various aspects;
FIG. 2D is a rear perspective view of the cleaning assembly of FIG. 2A, according to various aspects;
FIG. 2E is a bottom view of the cleaning assembly of FIG. 2A, according to various aspects;
FIG. 2F is a side view of the cleaning assembly of FIG. 2A, according to various aspects;
FIG. 2G is a perspective view of a cleaning assembly, which includes a material integrity sensor, according to various aspects; and
FIG. 3 is a flow chart depicting a method, according to various aspects.

### Detailed description

Aspects described below in the context of the apparatus are analogously valid for the respective methods, and vice versa. Furthermore, it will be understood that the aspects described below may be combined, for example, a part of one aspect may be combined with a part of another aspect.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, or structure or any part of any device or structure. In addition, the singular terms "a", "an", and "the" include plural references unless context clearly indicates otherwise. Similarly, the word "or" is intended to include "and" unless the context clearly indicates otherwise.

Various aspects generally relate to a cleaning assembly (e.g. a cleaning device, apparatus, module, or unit) which may be coupled or integrated with a manipulator (e.g. a robotic arm). The cleaning assembly may harness the dexterity of the manipulator for positioning the cleaning assembly relative to a connector (e.g. a fiber optic connector), before the cleaning assembly performs a cleaning process on the connector's end-face.

The cleaning assembly may include a displaceable member (e.g. a movable extendable component) which may reach out (in other words, may be extendable) from the cleaning assembly to the connector's end-face. The displaceable member may accommodate a cleaning element, such as a cleaning cloth, enabling the cleaning element to be used for cleaning the end-face of the connector by extending the displaceable member to it.

The cleaning assembly may be capable of performing in-situ connector cleaning, without requiring the removal of any collaterals, which enhances efficiency.

Moreover, the automated cleaning process performed by the cleaning assembly may help reduce human-induced inconsistencies and errors.

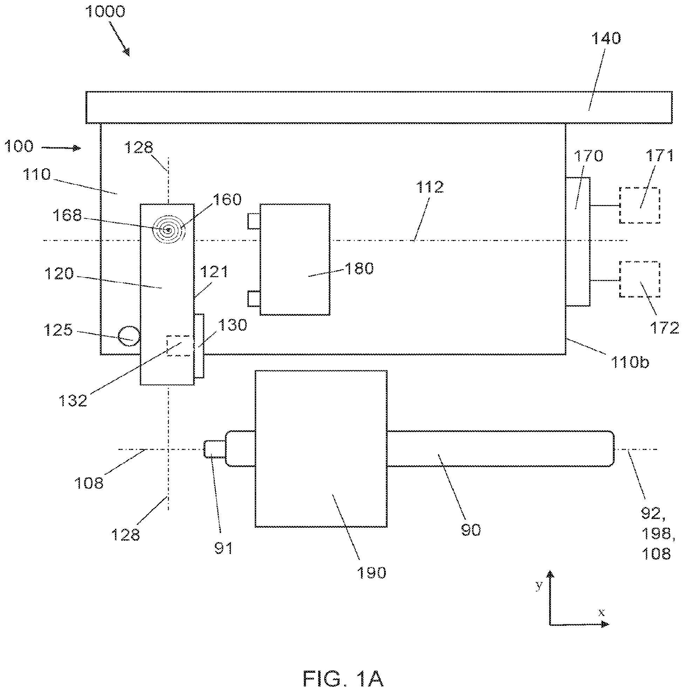

FIG. 1A is a schematic diagram of a cleaning assembly, with a displaceable member of the cleaning assembly in a first position, according to various aspects.

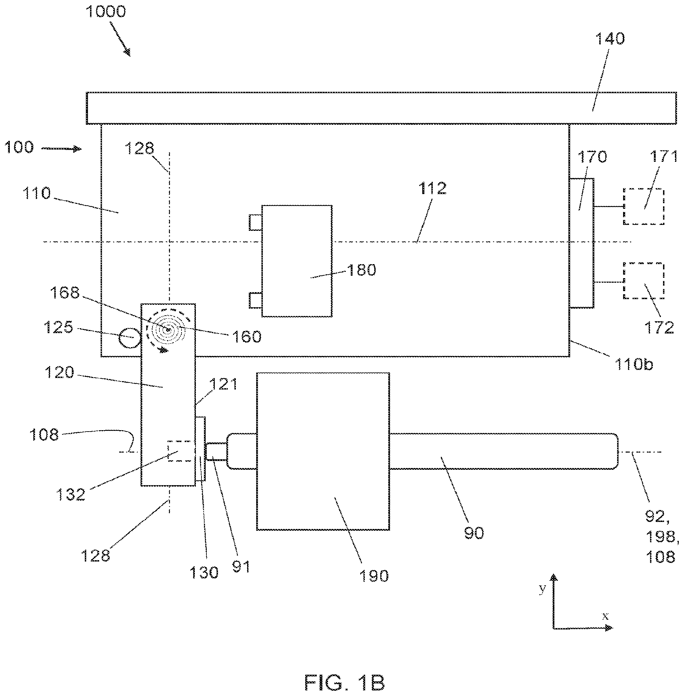

FIG. 1B is a schematic diagram of the cleaning assembly of FIG. 1A, with the displaceable member of the cleaning assembly in a second position, according to various aspects.

According to various aspects, there may be provided the cleaning assembly 100 (e.g. an assembly).

The cleaning assembly 100 may be configured to clean the tip or end-face 91 of one or more connectors 90 (e.g. optical connectors, fiber optic connectors, etc.) in an automated manner (in other words, without the need for manual intervention), while the connectors 90 are held by a connector-holding arrangement 190. Examples of the connector-holding arrangement 190 include, but are not limited to, a robotic arm, articulated arm, end-effector, gripper, etc., capable of holding and/or manipulating or moving one or more connectors 90.

According to various aspects, the cleaning assembly 100 may be linked with the connector-holding arrangement 190, for instance, by being connected or coupled, indirectly or directly, to the connector-holding arrangement 190. According to various aspects, with the cleaning assembly 100 linked with the connector-holding arrangement 190, a displaceable member 120 of the cleaning assembly 100, which may support a cleaning element 130 such as a cleaning cloth thereon, described in detail later, may be extendable towards a connector 90 (e.g. held by the connector-holding arrangement 190) to clean the connector 90.

As an example, according to various aspects, the cleaning assembly 100 may be linked with the connector-holding arrangement 190 by being indirectly connected to the connector-holding arrangement 190 via a manipulator 140. The manipulator 140 (e.g. a robotic arm) may be configured to be movable (e.g. independently movable) relative to the connector-holding arrangement 190. Referring to FIG. 1A, a mounting frame 110 of the cleaning assembly 100 may be coupled to the manipulator 140 (e.g. to a chassis or frame of the manipulator 140 via one or more fasteners, screw(s), bolt(s) and nuts(s), etc., or a welding joint), and the manipulator 140 may move relative to the connector-holding arrangement 190 to position the mounting frame 110 of the cleaning assembly 100 proximal to (e.g. close to and/or over) the connector-holding arrangement 190. As depicted in FIG. 1A, the manipulator 140 may position the mounting frame 110 of the cleaning assembly 100 proximal to the connector-holding arrangement 190, with the mounting frame 110 (or the entire cleaning assembly 100 itself) spaced apart from the connector-holding arrangement 190. It is envisaged that, in other implementations, the manipulator 140 may position the mounting frame 110 proximal to the connector-holding arrangement 190, with the mounting frame 110 (or any other component of the cleaning assembly 100) in contact (e.g. resting on) the connector-holding arrangement 190.

As another example, according to various other aspects (not shown), the cleaning assembly 100 may be linked with the connector-holding arrangement 190 by being directly attached, directly coupled, or retrofitted to the connector-holding arrangement 190 (e.g. without the presence or intervention of the aforementioned manipulator 140). For instance, the mounting frame 110 may be directly coupled or secured to a chassis or frame of the connector-holding arrangement 190 (e.g. on a side, bottom, or top of the chassis of the connector-holding arrangement 190 via one or more fasteners, screw(s), bolt(s) and nuts(s), etc., or a welding joint).

According to various aspects, the mounting frame 110 of the cleaning assembly 100 may be a rigid mounting frame 110 (e.g. composed of a hard and/or rigid material). Further, the mounting frame may include or may be configured (e.g. shaped) as a planar or as a plate (or plate-like) structure for accommodating one or more other components (e.g. electrical components, mechanical components, etc.) of the cleaning assembly 100. The mounting frame 110 may also be shaped and/or sized (e.g. may be elongated) in a manner such that it extends in a direction parallel (e.g. substantially parallel) with a connector-alignment axis 198 of the connector-holding arrangement 190 (which aligns with and/or is coincident with a longitudinal axis 92 of a corresponding connector 90 that is held by the connector-holding arrangement 190). For ease of illustration, various aspects may be described with reference to the connector-holding arrangement 190 having "a connector-alignment axis" for holding and aligning "a connector" there along. Nevertheless, it is envisaged that, in other implementations, the connector-holding arrangement 190 may be configured to hold "a plurality of connectors", respectively, along "a plurality of connector-alignment axes" (e.g. parallel connector-alignment axes) of the connector-holding arrangement 190.

According to various aspects, the cleaning assembly 100 may include (e.g. further include) a displaceable member 120 coupled to the mounting frame 110. More specifically, the displaceable member 120 may be operatively coupled to the mounting frame 110 in a manner so as to be displaceable (e.g. movable) relative to the mounting frame 110. As an example, the displaceable member 120 may be operatively coupled or connected to the mounting frame 110 via one or a combination of connecting gear(s) or gear train(s), movable or pivotable joint(s), bearing(s), sliding mechanism(s), cam and follower, linkage(s), threaded engagement(s), etc.

According to various aspects, the displaceable member 120 may be configured to be displaceable or movable linearly. For example, the mounting frame 110 may include an alignment element (e.g. an alignment rod or a track) (not shown) configured to mate with a corresponding alignment element (e.g. a bore or a slider) of the displaceable member 120 to guide the displaceable member 120 linearly, along a movement axis 128 (e.g. a linear movement axis 128). According to various aspects, the displaceable member 120 may be configured to be displaceable along the movement axis 128, between a first position (as depicted in FIG. 1A) and a second position (as depicted in FIG. 1B) (e.g. relative to the connector-holder arrangement 190). According to various aspects, when the mounting frame 110 is an elongate mounting frame 110 which extends in a direction parallel with the connector-alignment axis 198 of the connector-holding arrangement 190 (e.g. along the x-axis) and, by extension, parallel with the longitudinal axis 92 of the connector 90 held by the connector-holding arrangement 190, the movement axis 128 of the displaceable member 120 may be non-parallel to (in other words, may be at an angle, e.g. may be perpendicular or substantially perpendicular to) a longitudinal axis 112 of the mounting frame 110. Further, the movement axis 128 may be extending along a height of the mounting frame 110 (e.g. extending vertically, along the y-axis).

According to various aspects, the displaceable member 120 may be configured to support a cleaning element 130 thereon. Specifically, the displaceable member 120 may have a body (e.g. an elongate and/or rigid body) configured to support the cleaning element 130 thereon.

Accordingly, according to various aspects, the cleaning assembly 100 may include (e.g. optionally or further include) the cleaning element 130. The cleaning element 130 may be disposed on (e.g. directly or indirectly on) and/or over an outer surface 121 of the displaceable member 120. Specifically, the cleaning element 130 may be supported on, at least, a surface (herein may be referred to as the "cleaning-surface") of the displaceable member 120 which may be facing a rear end or rear end region of the cleaning assembly 100 (e.g. generally towards the rear end region 110b of the mounting frame 110 of the cleaning assembly 100, for instance, at least when the displaceable member 120 is in the first position).

As some examples, the cleaning element 130 may be or may include a cleaning material, such as cloth (e.g. microfiber cloth, cleaning cloth, lint-free cloth, etc.), a cleaning fluid (e.g. fiber optic cleaning fluid infused in a cleaning cloth), a duster, etc., positioned on or over the outer surface 121 (or at least over the cleaning-surface) of the displaceable member 120. According to various other aspects, the cleaning element 130 may be integral or integrated with the outer surface 121 (or at least the cleaning-surface) of the displaceable member 120. For instance, the outer surface 121 (or at least the cleaning-surface) of the displaceable member 120 may be textured and/or may be composed of a cleaning material capable of removing contaminants from an object, such as a tip or an end-face 91 of a connector 90.

FIG. 1A depicts the displaceable member 120 in the first position, while the mounting frame 110 of the cleaning assembly 100 is proximal to (e.g. close to and over) the connector-holding arrangement 190. As shown in FIG. 1A, when the displaceable member 120 is in the first position, the displaceable member 120 (e.g. the entire displaceable member 120 itself), including any cleaning element 130 thereon, may be apart and/or away (e.g. out of the path of) a cleaning-axis 108 of the cleaning assembly 100. For example, in the first position of the displaceable member 120, the displaceable member 120 (e.g. the entire displaceable member 120 itself), including any cleaning element 130 thereon, may be situated next to the cleaning-axis 108, but without intersecting or crossing the cleaning-axis 108 in any way. According to various aspects, the cleaning-axis 108 of the cleaning assembly 100 may be an axis (e.g. a linear reference axis) which aligns with and/or is coincident with the connector-alignment axis 198 of the connector-holding arrangement 190 and/or with the longitudinal axis 92 of the connector 90 held by the connector-holding arrangement 190. In other words, with the mounting frame 110 of the cleaning assembly 100 linked with the connector-holding arrangement 190, the cleaning-axis 108 of the cleaning assembly 100 may be aligned and/or coincident with the connector-alignment axis 198 of the connector-holding arrangement 190 and/or the longitudinal axis 92 of the connector 90 held by the connector-holding arrangement 190. As depicted in FIG. 1A, the cleaning-axis 108 may be non-parallel (e.g. at an angle) to the movement axis 128 of the displaceable member 120. Specifically, as an example, the cleaning-axis 108 may be perpendicular or substantially perpendicular to the movement axis 128 of the displaceable member 120. Further, according to various aspects, the cleaning-axis 108 may be, but is not limited to being, parallel (e.g. substantially parallel) with a longitudinal axis 112 of the mounting frame 110 (e.g. horizontally, along the x-axis).

Furthermore, when the displaceable member 120 is in the first position, as depicted in FIG. 1A, the displaceable member 120 may be alongside (e.g. side by side) the mounting frame 110 such that the displaceable member 120 may be aligned (e.g. horizontally aligned) with the longitudinal axis 112 of the mounting frame 110. The longitudinal axis 112 of the mounting frame 110 may be an axis which extends across the mounting frame 110 itself (e.g. horizontally, along the x-axis), but need not be along a center of the mounting frame 110. According to various aspects, when the mounting frame 110 is an elongate mounting frame 110 which extends along the x-axis, as depicted in FIG. 1A, the longitudinal axis 112 of the mounting frame 110 may be extending lengthwise of the mounting frame 110. It is envisaged that, in other implementations, in which the mounting frame 110 may be any other shape and/or in any other orientation, said "longitudinal axis" of the mounting frame 110 may refer to an axis which is non-parallel (e.g. perpendicular or substantially perpendicular) to the movement axis 128, but parallel or substantially parallel with the connector-alignment axis 198 of the connector-holding arrangement 190.

FIG. 1B depicts the displaceable member 120 in the second position, while the mounting frame 110 of the cleaning assembly 100 is proximal to (e.g. close to and over) the connector-holding arrangement 190. Referring to FIG. 1B, when the displaceable member 120 is in the second position, the displaceable member 120, including any cleaning element 130 thereon, may be intersecting the cleaning-axis 108 of the cleaning assembly 100. In other words, when the displaceable member 120 is moved from the first position to the second position, the displaceable member 120, including any cleaning element 130 thereon, may be moved into the path of the cleaning-axis 108. Specifically, in the second position of the displaceable member 120, the cleaning-surface of the displaceable member 120, and any cleaning element 130 thereon, may be intersecting the cleaning-axis 108 and, by extension, may be aligned (e.g. horizontally aligned) with a tip or an end-face 91 of a connector 90 that is held by the connector-holding arrangement 190 along the connector-alignment axis 198 of the connector-holding arrangement 190. Conversely, when the displaceable member 120 is moved from the second position to the first position, the displaceable member 120, including any cleaning element 130 thereon, may be moved away from and/or out of the path of the cleaning-axis 108.

Furthermore, when the displaceable member 120 is in the second position, as depicted in FIG. 1B, the displaceable member 120 may be extended away from the mounting frame 110 such that the displaceable member 120 is apart and/or away from the longitudinal axis 112 of the mounting frame 110 (in other words, offset or not horizontally aligned with the longitudinal axis 112 of the mounting frame 110). That is, when the displaceable member 120 is moved from the first position to the second position, the displaceable member 120 may be moved away from the longitudinal axis 112 of the mounting frame 110.

According to various aspects, the cleaning assembly 100 may include a drive assembly (herein may be referred to as a "displaceable-member-drive-assembly") 125 which may be coupled (or mounted) to the mounting frame 110, and coupled (e.g. operatively coupled) to the displaceable member 120. The displaceable-member-drive-assembly 125 may be configured to drive (e.g. move or displace) the displaceable member 120 along the movement axis 128 (e.g. from the first position to the second position, from the second position to the first position, or between the first position and the second position). For instance, the displaceable-member-drive-assembly 125 may include an actuator or motor (e.g. an electric motor, brushless motor, stepper motor, NEMA 8 motor, etc.) operatively coupled to the displaceable member 120 (e.g. via one or a combination of connecting gear(s) or gear train(s), movable or pivotable joint(s), bearing(s), sliding mechanism(s), cam and follower, linkage(s), threaded engagement(s), etc.) to move or displace the displaceable member 120.

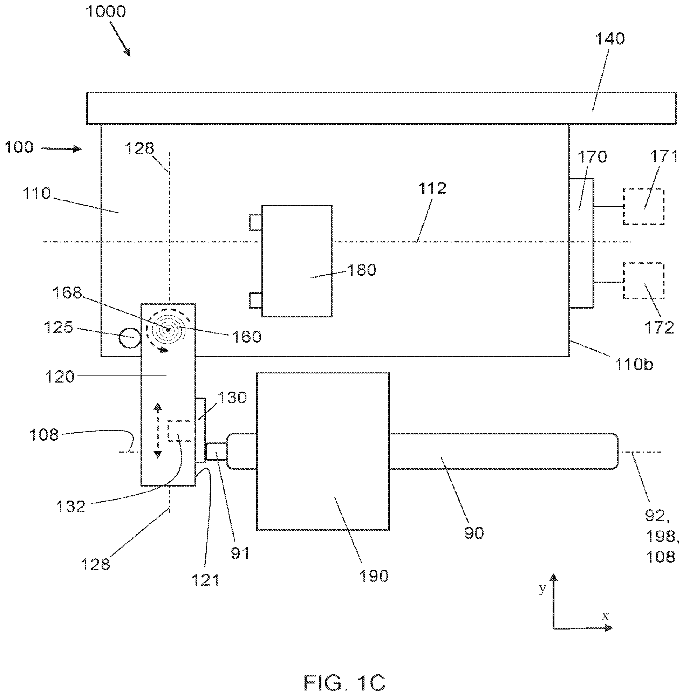

FIG. 1C is a schematic diagram of the cleaning assembly of FIG. 1A, depicting movement of the cleaning element relative to the connector, while the displaceable member of the cleaning assembly is in the second position, according to various aspects.

With reference to FIG. 1C, in the second position of the displaceable member 120, the cleaning-surface of the displaceable member 120, and any cleaning element 130 thereon, may be aligned with and/or interfacing (e.g. may be in physical contact) with a tip or an end-face 91 of a connector 90 held by the connector-holding arrangement 190 (i.e. along the connector-alignment axis 198 of the connector-holding arrangement 190). In this setup, the cleaning element 130 may be configured to be moved against and/or relative to the tip or end-face 91 of the connector 90 to clean the tip or end-face 91 of the connector 90. According to various aspects, cleaning of the tip or end-face 91 of the connector 90 may involve moving the cleaning element 130 unidirectionally (e.g. in a single direction) or bidirectionally (e.g. in opposite directions) relative and/or tangential to the tip or end-face 91 of the connector 90.

For example, according to various aspects, to move the cleaning element 130, the cleaning assembly 100 may include a further or another drive assembly (herein may be referred to as a "cleaning-element-drive-assembly") 132 which may be coupled to the mounting frame 110 (e.g. directly or indirectly coupled to the mounting frame 110), and coupled (e.g. operatively coupled) to the cleaning element 130. The cleaning-element-drive-assembly 132 may be configured to move the cleaning element 130 (e.g. cleaning material, cloth, etc.) relative to the displaceable member 120 (e.g. relative to the cleaning-surface of the displaceable member 120), as depicted in FIG. 1C, which may translate to corresponding movement of the cleaning element 130 against and/or relative to the tip or end-face 91 of the connector 90 that is situated along the cleaning-axis 108 (i.e. which coincides with the connector-alignment axis 198 of the connector-holding arrangement 190). As an example, the cleaning-element-drive-assembly 132 may include another actuator or a motor (e.g. an electric motor, brushless motor, stepper motor, NEMA 8 motor, etc.) operatively coupled to the cleaning element 130 (e.g. via one or a combination of connecting gear(s) or gear train(s), movable or pivotable joint(s), bearing(s), sliding mechanism(s), cam and follower, linkage(s), threaded engagement(s), etc.) to move the cleaning element 130 (e.g. over a distance, as depicted by FIG. 1B and FIG. 1C, parallel to the movement axis 128 of the displaceable member 120).

As another example, according to various other aspects, movement of the cleaning element 130 against and/or relative to the tip or end-face 91 of the connector 90 may be achieved by moving the displaceable member 120 itself. In such a setup, the cleaning element 130 may be stationary or fixed in place on the displaceable member 120, while the displaceable member 120 moves against and/or relative to the tip or end-face 91 of the connector 90.

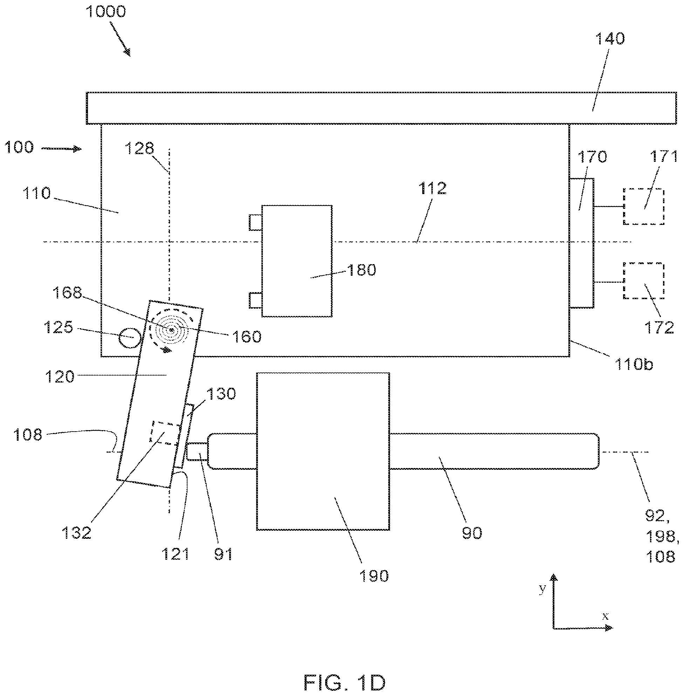

FIG. 1D depicts the displaceable member pivoted about a pivot axis, according to various aspects.

According to various aspects, the displaceable member 120 may be configured to be pivotable about a pivot axis 168. The pivot axis 168 may be non-parallel to the movement axis 128 of the displaceable member 120. As an example, with reference to FIG. 1D, the movement axis 128 may be along the y-axis, while the pivot axis 168 may be along a z-axis (e.g. an axis into the page, which may be orthogonal to both the y-axis and the x-axis). That is, according to various aspects, the pivot axis 168 may be perpendicular or substantially perpendicular to the movement axis 128. As an example, as depicted in FIG. 1D, a segment of the displaceable member 120 (herein referred to as "cleaning-segment" of the displaceable member) on which the cleaning element 130 may be situated may be located at a first end region of the displaceable member 120, while the pivot axis 168 may be located at an opposite or second end region of the displaceable member 120. In this manner, the displaceable member 120 may have a degree of compliance, flexibility or allowance (e.g. permissible deviation) to move (e.g. pivot) away from the tip or end-face 91 of the connector 90, for instance, as the displaceable member 120 is moved towards the second position (i.e. from the first position), to avert or minimize potential damage to the connector 90, particularly when the connector 90 extends excessively forward, as depicted in FIG. 1D. It is envisaged that, in other implementations, said permissible deviation for the displaceable member 120 to move away from the tip or end-face 91 of the connector 90 may involve a horizontal and/or linear movement of the displaceable member 120 (e.g. instead of the rotational or pivotal movement described above).

Referring to FIG. 1C, according to various aspects, the cleaning assembly 100 may include (e.g. optionally or further include) a biasing element 160 configured to exert a biasing force on the displaceable member 120 to urge the displaceable member 120 towards a rear end or rear end region of the cleaning assembly 100 (e.g. generally towards the rear end region 110b of the mounting frame 110 of the cleaning assembly 100). Specifically, according to various aspects, the biasing element 160 may be configured to exert a biasing force on the displaceable member 120 to urge at least the cleaning-segment of the displaceable member 120, and any cleaning element 130 on the cleaning-segment, toward the rear end region 110b of the mounting frame 110. Consequently, when a connector 90 is held by the connector-holding arrangement 190 along the connector-alignment axis 198 of the connector-holding arrangement 190, which aligns and/or is coincident with the cleaning-axis 108 of the cleaning assembly 100, and with the displaceable member 120 in the second position (as depicted in FIG. 1C), the biasing element 160 may urge the cleaning-surface (or at least the cleaning-segment) of the displaceable member 120, and any cleaning element 130 thereon, against or toward the tip or end-face 91 of the connector 90. Such a setup may help ensure contact (e.g. constant contact) between the displaceable member 120 (or any cleaning element 130 thereon) and the tip or end-face 91 of the connector 90, particularly, while the cleaning element 130 is moved relative to the tip or end-face 91 of the connector 90. As an example, the biasing element 160 may include or may be a spring (e.g. a torsional spring, coil spring, leaf spring, etc.), a magnetic biasing element 160 (e.g. magnetic spring), an elastic band (e.g. rubber band), etc. As an illustration, the biasing element 160 (e.g. a spring) may be coupled to the mounting frame 110 (e.g. serving as a support structure to the biasing element 160) as well as coupled to the displaceable member 120, to thereby bias the displaceable member 120 relative to the mounting frame 110.

According to various aspects, the cleaning assembly 100 may include (e.g. further include) an interface arrangement 170. The interface arrangement 170 may be coupled (e.g. fastened) to the mounting frame 110, and may be connected (e.g. electrically connected) to various electrical components of the cleaning assembly 100.

According to various aspects, the interface arrangement 170 may include a power supply interface configured to be connectable to a power source 171. As some examples, the power source 171 may be a mains supply or may be a power source of a handler system (e.g. which includes the connector-holding arrangement 190).

According to various aspects, the interface arrangement 170 may include (e.g. further include) a communication interface configured to communicate with a controller 172. For example, the communication interface may be connected to the controller 172 via wired or wireless connection, for wired or wireless communication (e.g. for transmission of data, signal(s), information, etc., in other words, for sending and/or receiving data, signal(s), information, etc.). According to various aspects, the controller 172 may be within the handler system.

It is envisaged that, in other implementations, according to various other aspects, the power source 171 and/or the controller 172 may be integrated and/or incorporated into the cleaning assembly 100. For example, the power source 171 and/or the controller 172 may be mounted to the mounting frame 110 of the cleaning assembly 100.

According to various aspects, the cleaning assembly 100 may include (e.g. further include) a position sensor arrangement 180. The position sensor arrangement 180 may be coupled to the mounting frame 110 and may be powered by the power source 171. According to various aspects, the position sensor arrangement 180 may be configured to determine a position or location of the displaceable member 120 relative to the mounting frame 110. Specifically, the position sensor arrangement 180 may be configured to detect or sense whether the displaceable member 120 is in the first position (or whether the displaceable member 120 is in a retracted position) or in the second position (or whether the displaceable member 120 is fully extended from the mounting frame 110). As some examples, the position sensor arrangement 180 may include or may be an arrangement of at least one (e.g. one or more) position sensor(s), optical sensor(s), proximity sensor(s), hall effect sensor(s) (e.g. when the displaceable member 120 includes a magnetic element for detection by the hall effect sensor), etc. As a non-limiting example, according to various aspects, the position sensor arrangement 180 may include a pair of sensors (e.g. position sensors) which may be arranged such that a first sensor of the pair may be aligned (e.g. horizontally aligned) with the displaceable member 120 when the displaceable member 120 is in the first position and a second sensor of the pair may be aligned (e.g. horizontally aligned) with the displaceable member 120 when the displaceable member 120 is in the second position.

According to various aspects, the connector-holding arrangement 190, the manipulator 140, and the cleaning assembly 100 (e.g. one or more of the cleaning assembly 100) may together form, or may be part of, a cleaning system 1000 (e.g. a system).

According to various aspects, the cleaning system 1000 may include (e.g. optionally include) the handler system (not shown).

Within the cleaning system 1000, the mounting frame 110 of the cleaning assembly 100 may be associated or linked with the connector-holding arrangement 190, for instance, by being connected or coupled (e.g. indirectly or directly connected or coupled) to the connector-holding arrangement 190.

Further, within the system 1000, the displaceable member 120 may be operatively coupled to the mounting frame 110, and with the manipulator 140 positioning the mounting frame 110 proximal to the connector-holding arrangement 190, the displaceable member 120 may be displaceable (or movable) relative to the connector-holding arrangement 190, along the movement axis 128, between the first position and the second position.

Within the cleaning system 1000, the cleaning-axis 108 of the cleaning assembly 100 may be aligned and/or coincident with the connector-alignment axis 198 of the connector-holding arrangement 190. As such, within the cleaning system 1000, when the displaceable member 120 is in the first position, the displaceable member 120, and any cleaning element 130 on the displaceable member 120, may be apart or away (e.g. out of the path of) the connector-alignment axis 198 of the connector-holding arrangement 190. Conversely, when the displaceable member 120 is in the second position, the displaceable member 120, and any cleaning element 130 thereon, may be intersecting the connector-alignment axis 198 of the connector-holding arrangement 190.

According to various aspects, the cleaning system 1000 may include (e.g. further include) the power source 171. The power source 171 of the cleaning system 1000 may be configured to supply power to the connector-holding arrangement 190, the manipulator 140, and/or to the cleaning assembly 100 (e.g. to electrical components of the cleaning assembly 100).

According to various aspects, the cleaning system 1000 may include (e.g. further include) the controller 172. The controller 172 may be configured to control one or more components (e.g. electrical components, mechanical components, etc.) of the cleaning system 1000. Specifically, the controller 172 may be configured to control the connector-holding arrangement 190, the manipulator 140, and/or the cleaning assembly 100. For example, the controller 172 may be configured to control a movement of the connector-holding arrangement 190 and/or a movement of the manipulator 140. Additionally, or alternatively, the controller 172 may be configured to control a displacement or movement of the displaceable member 120 of the cleaning assembly 100 relative to the connector-holding arrangement 190, for example, by controlling (e.g. independently controlling) the displaceable-member-drive-assembly 125 of the cleaning assembly 100 to drive the displaceable member 120. According to various aspects, the controller 172 may be further configured to control a movement of the cleaning element 130 of the cleaning assembly 100, for example, by controlling (e.g. independently controlling) the cleaning-element-drive-assembly 132 of the cleaning assembly 100 to drive the cleaning element 130.

According to various aspects, the cleaning system 1000 may include (e.g. further include) the position sensor arrangement 180. Within the cleaning system 1000, the position sensor arrangement 180 may be mounted on the mounting frame 110 of the cleaning assembly 100.

Alternatively, the position sensor arrangement 180 may be mounted on (e.g. directly on) a chassis of the connector-holding arrangement 190 or a chassis of the manipulator 140. That is, within the cleaning system 1000, the position sensor arrangement 180 may be physically (spaced) apart from other components (e.g. the mounting frame 110) of the cleaning assembly 100. It is envisaged that, in other implementations of the cleaning system 1000, any other arrangement or position of the position sensor arrangement 180 may be possible.

Various aspects may optionally or further include the connector 90 (e.g. optic fiber connector) on (e.g. held by) the connector-holding arrangement 190, within the cleaning system 1000. Specifically, the connector 90 may be along and aligned with the connector-alignment axis 198 of the connector-holding arrangement 190. In this setup, the displaceable member 120 of the cleaning assembly 100 may be movable relative to the connector 90, between the first position in which the displaceable member 120 may be away or not contacting the connector 90 and the second position in which the displaceable member 120 may be interfacing, engaging, or contacting the connector 90 (e.g. the tip or end-face 91 of the connector).

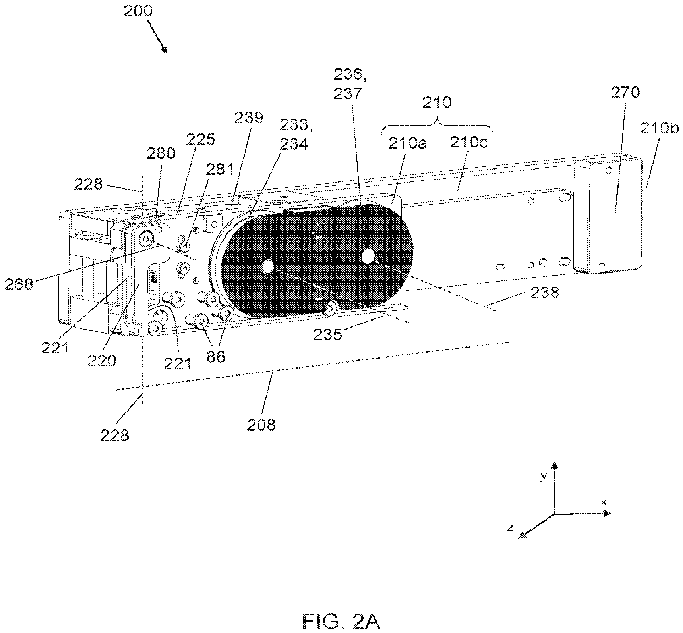

FIG. 2A is a perspective view of a cleaning assembly, which includes a material-dispensing unit and a material-collecting unit, according to various aspects.

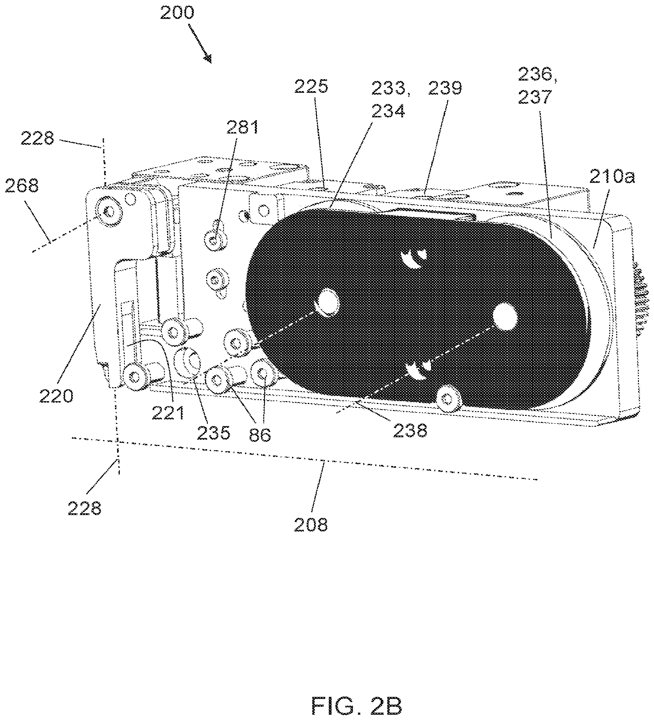

FIG. 2B is another perspective view of the cleaning assembly of FIG. 2A, with a displaceable member of the cleaning assembly in a first position, according to various aspects.

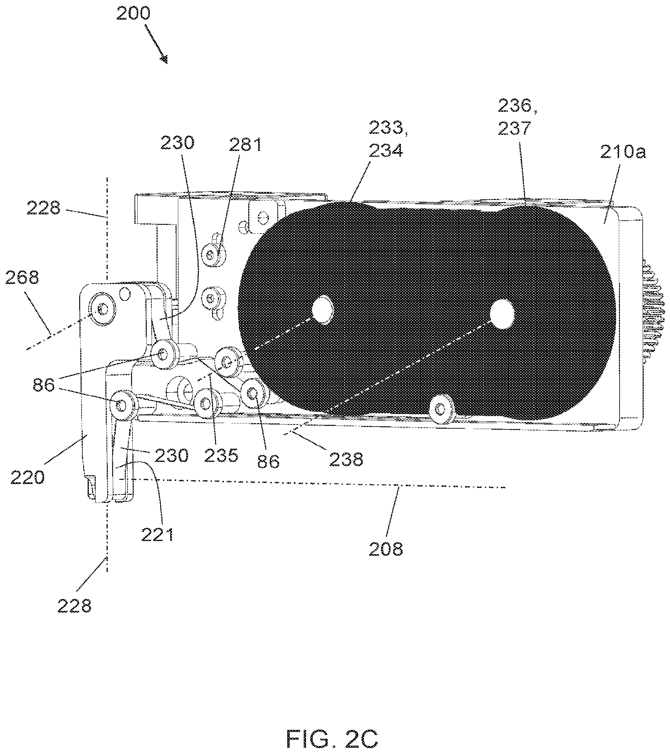

FIG. 2C is a perspective view of the cleaning assembly of FIG. 2A, with the displaceable member of the cleaning assembly in a second position and being provided with a cleaning element, according to various aspects.

According to various aspects, there may be provided the cleaning assembly 200. According to various aspects, the cleaning assembly 200 may contain any one or more or all the features and/or limitations of the cleaning assembly 100 of FIG. 1A to FIG. 1D. In the following, the cleaning assembly 200 is described with like reference characters generally referring to the same or corresponding parts/features of the cleaning assembly 100 of FIG. 1A to FIG. 1D. The description of the parts/features made with respect to the cleaning assembly 200 may also be applicable with respect to the cleaning assembly 100, and vice versa.

Referring to FIG. 2A, the cleaning assembly 200 may include a mounting frame 210. As shown, the mounting frame 210 may include a mounting plate 210a and a coupling plate 210c. The mounting plate 210a and the coupling plate 210c may be coupled to each other (e.g. via one or more fasteners, screw(s), bolt(s) and nuts(s), etc.). According to various aspects, the coupling plate 210c may be configured to be coupled to a connector-holding arrangement (e.g. such as the connector-holding arrangement 190 of FIG. 1A) or to a chassis of a manipulator (e.g. such as the manipulator 140 of FIG. 1A), while the mounting plate 210a may accommodate one or more components (e.g. electrical components, mechanical components, etc.) of the cleaning assembly 200.

As in the cleaning assembly 100 of FIG. 1A, the cleaning assembly 200 may include (e.g. further include) a displaceable member 220. The displaceable member 220 may be movable, along a movement axis 228, between a first position and a second position. In the first position of the displaceable member 220, the displaceable member 220 may be apart from a cleaning-axis 208 of the cleaning assembly 200. As shown, the cleaning-axis 208 may be non-parallel to the movement axis 228. In the second position of the displaceable member 220, as shown in FIG. 2C, the displaceable member 220 may intersect the cleaning-axis 208.

As in the cleaning assembly 100 of FIG. 1A, the displaceable member 220 may (e.g. optionally) be configured to be pivotable about a pivot axis 268. Further, the cleaning assembly 200 may include (e.g. optionally include) a biasing element (e.g. a torsional spring) (not shown in FIG. 2A to FIG. 2C), which may be similar to the biasing element 160 of FIG. 1C. Accordingly, such a biasing element within the cleaning assembly 200 may be configured to bias the displaceable member 220 about the pivot axis 268.

Further, referring to FIG. 2A, as in the cleaning assembly 100 of FIG. 1A, the cleaning assembly 200 may include (e.g. further include) a position sensor arrangement 280, which may include an arrangement of one or more position sensor(s), configured to detect or determine whether the displaceable member 220 is in the first position or in the second position. As shown in FIG. 2A, the position sensor arrangement 280 may be held by a bracket (e.g. an adjustable bracket) 281 (which may be mounted or coupled to at least the mounting plate 210a). As an example, the position sensor arrangement 280 may include at least one sensor (e.g. a proximity sensor) which may be approximately 3 mm away from the displaceable member 220 when the displaceable member 220 is in the first position, and may be configured to sense if the displaceable member 220 is in the first position or away from the first position.

According to various aspects, the cleaning assembly 200 may further include the following additional features and/or limitations.

Referring to FIG. 2C, according to various aspects, the cleaning assembly 200 may include a material-dispensing unit 233 configured to dispense the cleaning element 230 (e.g. a cleaning material). Specifically, the material-dispensing unit 233 may be configured to dispense "unused" or "new" cleaning element 230 on and/or over the outer surface 221 (e.g. over at least the "cleaning-surface" or at least the "cleaning-segment") of the displaceable member 220. According to various aspects, the cleaning element 230 may be provided to the material-dispensing unit 233, so that an operation (e.g. movement) of the material-dispensing unit 233 may cause the cleaning element 230 to be dispensed on and/or over the outer surface 221 of the displaceable member 220.

According to various aspects, the cleaning assembly 200 may include (e.g. further include) a material-collecting unit 236 configured to collect or gather the cleaning element 230. Specifically, the material-collecting unit 236 may be configured to collect or gather "used" or "old" cleaning element 230 from (e.g. away from) the outer surface 221 (e.g. the "cleaning-surface" or the "cleaning-segment") of the displaceable member 220. For example, the cleaning element 230 may be attached (e.g. at one end of the cleaning element 230) to the material-collecting unit 236, and the material-collecting unit 236 may be operable to gather or collect the cleaning element 230 into the material-collecting unit 236.

According to various aspects, when the cleaning assembly 200 includes both the material-dispensing unit 233 and the material-collecting unit 236, the material-dispensing unit 233 and the material-collecting unit 236 may cooperate (or work in tandem) to provide "unused" or "new" cleaning element 230 over or on at least the cleaning-surface of the displaceable member 220, while (e.g. simultaneously) removing "used" or "old" cleaning element 230 from at least the cleaning-surface of the displaceable member 220. As an example, with reference to FIG. 2A to FIG. 2C, the material-dispensing unit 233 may include a first reel 234 (e.g. a cylindrical reel) configured to be rotatable about a first rotational axis 235, and the material-collecting unit 236 may include a second (e.g. another) reel 237 (e.g. a cylindrical reel) configured to be rotatable about a second rotational axis 238. As shown, the first rotational axis 235 and the second rotational axis 238 may be parallel (e.g. substantially parallel) with one another. Further, the first reel 234 and the second reel 237 may be extending or lying on a same (reference) plane (not shown). As shown, the first rotational axis 235 and the second rotational axis 238 may be non-parallel (e.g. perpendicular or substantially perpendicular) to the movement axis 228 of the displaceable member 220. Referring to FIG. 2C, the cleaning element 230 may be provided and connected to both the first reel 234 and the second reel 237, e.g. at opposite ends of the cleaning element 230. Particularly, the cleaning element 230 may be a strip (e.g. long, continuous strip) of cleaning material (in other words, may be in the form of a tape or web) which may be attached at one end region to the first reel 234 and attached to another end region to the second reel 237. Specifically, the cleaning element 230 (e.g. a strip or tape of cleaning material) may be wound at one end around the first reel 234 (i.e. the material-dispensing unit 233) and wound at another end around the second reel 237 (i.e. the material-collecting unit 236). This arrangement may ensure that when the second reel 237 (i.e. the material-collecting unit 236) is set in motion (e.g. rotated) to wind or reel in cleaning element 230, it may cause the first reel 234 to (simultaneously) unwind and dispense cleaning element 230. In essence, an operation (e.g. movement or rotation) of the first reel 234 may be synchronized with an operation of the second reel 237, due to their connection via the cleaning element 230 (e.g. strip or tape of cleaning material). Thus, according to various aspects, a rate (or speed) at which cleaning element 230 (e.g. cleaning material) is dispensed by the material-dispensing unit 233 may correspond (e.g. may be equal) to a rate at which cleaning element 230 (e.g. cleaning material) is gathered by the material-collecting unit 236.

As shown in FIG. 2C, a portion of the cleaning element 230 (e.g. an intermediate portion of the strip or tape of cleaning material), between the first reel 234 and the second reel 237, may pass over an end or tip (e.g. distal tip) of the displaceable member 220.

Referring to FIG. 2C, the cleaning assembly 200 (e.g. the mounting plate 210a), may include at least one (in other words, one or more) guide member(s) 86 (e.g. guide pins) for guiding the cleaning element 230 (e.g. strip or tape of cleaning material). In particular, the guide member(s) 86 may guide the cleaning element 230 to extend along and/or be movable along a predetermined path. Specifically, the guide member(s) 86 may ensure that the cleaning element 230 is over (e.g. directly over) and/or along at least the cleaning-segment of the cleaning-surface of the displaceable member 220 (e.g. when the displaceable member 220 is in the second position, as shown in FIG. 2C). In other words, the guide member(s) 86 may route the cleaning element 230, such that at least a portion of the cleaning element 230 may be over or on at least the cleaning-segment of the displaceable member 220. As shown in FIG. 2C, the cleaning-segment may be a bottom (or bottommost) segment of the cleaning-surface (e.g. a rearward-facing outer surface 221) of the displaceable member 220. The guide member(s) 86 may also ensure that when the displaceable member 220 is in the second position, the cleaning element 230 would remain on the cleaning-segment of the displaceable member 220, even while the cleaning element 230 is moved relative to the displaceable member 220. In other words, the guide member(s) 86 may serve to ensure that the cleaning element 230 (e.g. between the first reel 234 and the second reel 237) does not slip out or away (e.g. sideways) from the displaceable member 220. As an example, as shown, the guide member(s) 86 may be guide pins(s) having an end that is flanged (herein referred to as "flanged-portion") to hold or keep the cleaning element 230 between the mounting plate 210a and the flanged-portion.

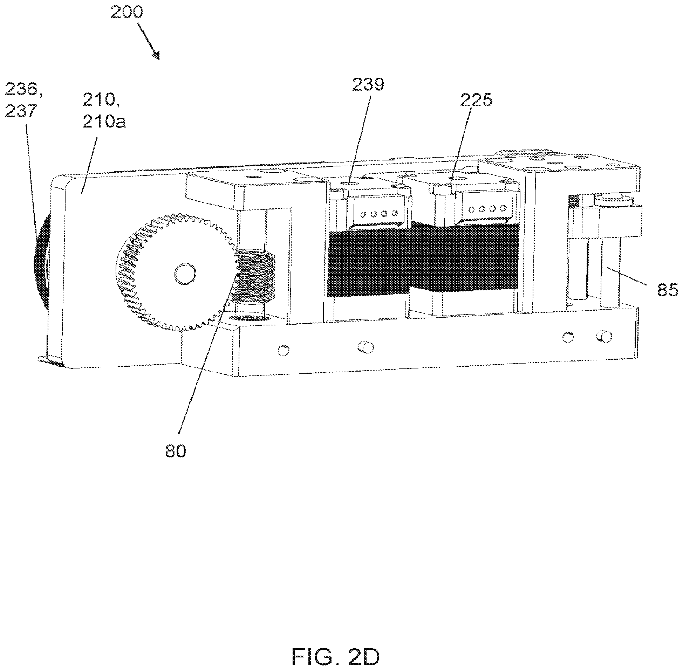

FIG. 2D is a rear perspective view of the cleaning assembly of FIG. 2A, according to various aspects.

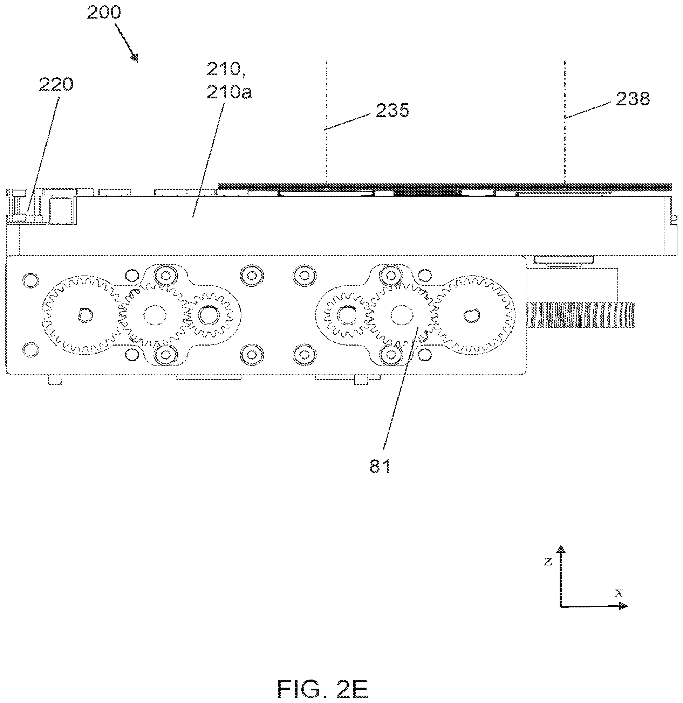

FIG. 2E is a bottom view of the cleaning assembly of FIG. 2A, according to various aspects.

According to various aspects, the cleaning assembly 200 may include (e.g. further include) a drive assembly (herein may be referred to as "material-collecting-unit-drive assembly") 239 which may be coupled (or mounted) to the mounting frame 210 (e.g. to the mounting plate 210a of the mounting frame 210), and coupled (e.g. operatively coupled) to the material-collecting unit 236 (e.g. to the second reel 237). The material-collecting-unit-drive assembly 239 may be configured to drive the material-collecting unit 236 (e.g. to cause the second reel 237 to rotate about the second rotational axis 238) to collect (e.g. reel in) the cleaning element 230. As an example, the material-collecting-unit-drive assembly 239 may include a motor (e.g. an electric motor, brushless motor, stepper motor, NEMA 8 motor, etc.) operatively coupled to the material-collecting unit 236 (e.g. to the second reel 237) to drive the material-collecting unit 236 (e.g. to rotate the second reel 237). As an example, the material-collecting-unit-drive assembly 239 and the material-collecting unit 236 may be operatively coupled to each other via connecting gears (which may include a worm gear 80 and gear train(s) 81), as shown in FIG. 2E and FIG. 2D. As other examples, the material-collecting-unit-drive assembly 239 and the material-collecting unit 236 (e.g. the second reel 237) may be operatively coupled to each other via one or a combination of movable or pivotable joint(s), bearing(s), sliding mechanism(s), cam and follower, linkage(s), threaded engagement(s), etc.

According to various other aspects (not shown), the cleaning assembly 200 may include (e.g. optionally or further include) another drive assembly (herein may be referred to as "material-dispensing-unit-drive assembly") which may be coupled (or mounted) to the mounting frame 210 (e.g. to the mounting plate 210a of the mounting frame 210), and coupled (e.g. operatively coupled) to the material-dispensing unit 233 (e.g. to the first reel 234). The material-dispensing-unit-drive assembly may be configured to drive the material-dispensing unit 233 (e.g. to cause the first reel 234 to rotate about the first rotational axis 235) to control or regulate an amount of cleaning element 230 being dispensed. Optionally, the material-dispensing-unit-drive assembly may also cause the first reel 234 to rotate in a reverse rotational direction (e.g. to adjust tautness of the cleaning element 230, e.g. strip of cleaning material).

Referring to FIG. 2D, as in the cleaning assembly 100 of FIG. 1A, the cleaning assembly 200 may include (e.g. further include) a displaceable-member-drive-assembly 225, which may include or may be a motor, for driving or causing the displaceable member 220 to be displaceable along the movement axis 228. As an example, as shown in FIG. 2D, the displaceable-member-drive-assembly 225 may be operatively coupled to the displaceable member 220 via at least a leadscrew 85 and/or other connecting elements.

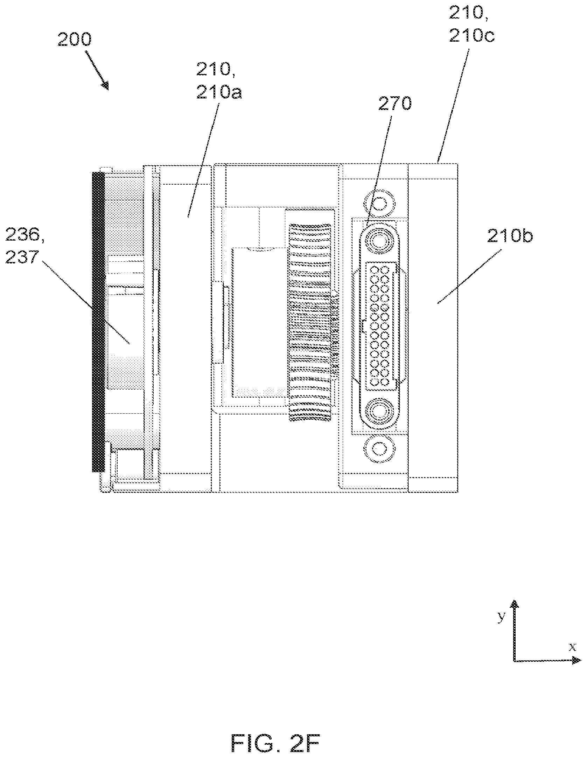

FIG. 2F is a side view of the cleaning assembly of FIG. 2A, according to various aspects.

With reference to FIG. 2A and FIG. 2F, as in the cleaning assembly 100 of FIG. 1A, the cleaning assembly 200 may include an interface arrangement 270. As an example, shown in FIG. 2A, the interface arrangement 270 may be disposed or positioned at a rear end 210b of the mounting frame 210 (e.g. at the coupling plate 210c of the mounting frame 210). It is envisaged that, in other implementations, the interface arrangement 270 may be at any location on the mounting frame 210. According to various aspects, the interface arrangement 270 may be configured to interface (e.g. connect and/or be in communication with) a handler system (e.g. a test handler system for testing devices and/or components, and which may be configured to manipulate one or more connectors).

According to various aspects, the interface arrangement 270 may include a power supply interface configured to be connectable to a power source, which may be similar to the power source 171 (i.e. described above with reference to FIG. 1A to FIG. 1D), to draw power from the power source. According to various aspects, the power source may be a power source of the handler system.

According to various aspects, the interface arrangement 270 may include (e.g. further include a communication interface configured to communicate with a controller, which may be similar to the controller 172 (i.e. described above with reference to FIG. 1A to FIG. 1D). For example, the communication interface may be connected to the controller via wired or wireless connection, for wired or wireless communication with the controller (e.g. for transmission of data, signal(s), information, etc., in other words, for sending and/or receiving data, signal(s), information, etc., to/from the controller). According to various aspects, the controller may be a controller of the handler system. As an example, the controller may be a Programmable Logic Controller.

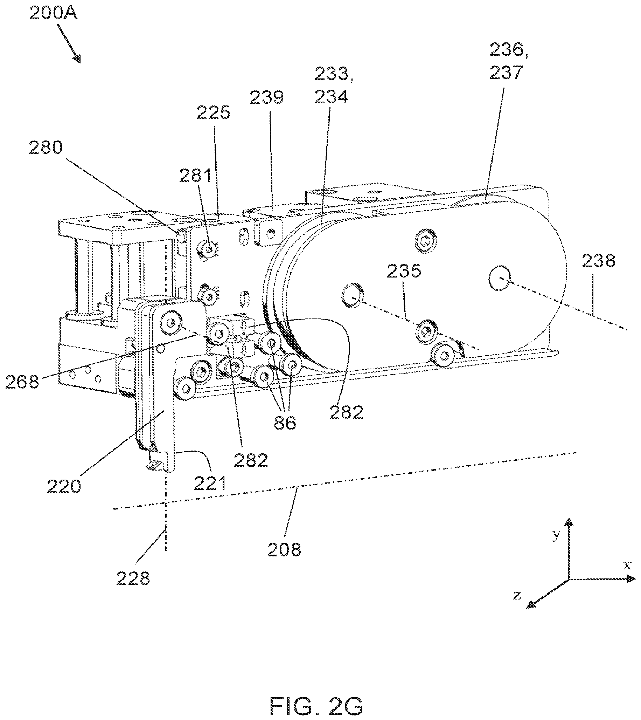

FIG. 2G is a perspective view of a cleaning assembly, which includes a material integrity sensor, according to various aspects.

According to various aspects, there may be provided the cleaning assembly 200A. According to various aspects, the cleaning assembly 200A may contain any one or more or all the features and/or limitations of the cleaning assembly 100 of FIG. 1A to FIG. 1D and/or the cleaning assembly 200 of FIG. 2A to FIG. 2F. In the following, the cleaning assembly 200A is described with like reference characters generally referring to the same or corresponding parts/features of the cleaning assembly 100 of FIG. 1A to FIG. 1D and/or the cleaning assembly 200 of FIG. 2A to FIG. 2F. The description of the parts/features made with respect to the cleaning assembly 200A may also be applicable with respect to the cleaning assembly 100 and/or the cleaning assembly 200, and vice versa.

According to various aspects, the cleaning assembly 200A may further include the following additional feature and/or limitation.

According to various aspects, the cleaning assembly 200A may further include a material integrity sensor arrangement 282 configured to detect any discontinuity or disruption of the cleaning element 230 (e.g. a strip or tape of cleaning material, as shown in FIG. 2C). According to various aspects, any discontinuity or disruption of the cleaning element 230 that is detected by the material integrity sensor arrangement 282 could signify a torn or broken cleaning element 230 or the depletion of "unused" or "new" cleaning element 230. As some examples, the material integrity sensor arrangement 282 may include or may be an arrangement of at least one (e.g. one or more) position sensor(s), optical sensor(s), proximity sensor(s), or camera(s), etc.

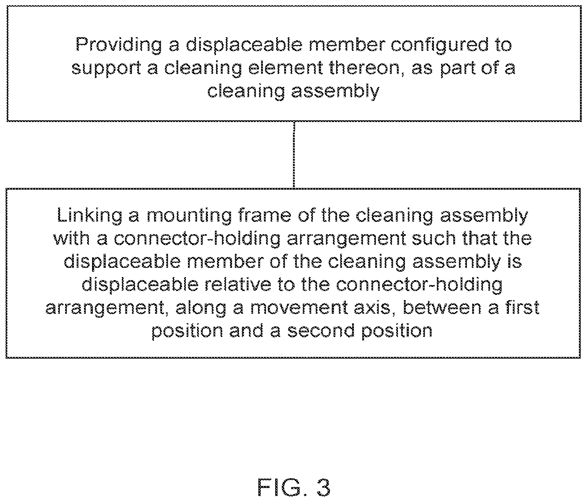

FIG. 3 is a flow chart depicting a method, according to various aspects.

According to various aspects, the method may include providing the cleaning assembly 100, 200, or 200A. The cleaning assembly 100, 200, or 200A may include the displaceable member 120 or 220 configured to support the cleaning element 130 or 230.

According to various aspects, the method may include linking the mounting frame 110 or 210 of the cleaning assembly 100, 200, or 200A with the connector-holding arrangement 190 such that the displaceable member 120 or 220 of the cleaning assembly 100, 200, or 200A (i.e. which may be operatively coupled to the mounting frame 110 or 210) may be displaceable relative to the connector-holding arrangement 190, along the movement axis 128 or 228, between the first position and the second position.

Accordingly, in the first position of the displaceable member 120 or 220, the displaceable member 120 or 220 may be apart from or not intersecting the connector-alignment axis 198 or 298 of the connector-holding arrangement 190.

In the second position of the displaceable member 120 or 220, the displaceable member 120 or 220 may intersect the connector-alignment axis 198 or 298 of the connector-holding arrangement 190.

According to various aspects, the method may include (e.g. further include) providing the cleaning element 130 or 230 as part of the cleaning assembly 100, 200, or 200A. Specifically, the cleaning element 130 or 230 may be provided at, on, and/or over the displaceable member 120 or 220.

According to various aspects, the method may include (e.g. further include) providing the cleaning-element-drive-assembly 132, and may include coupling (e.g. operatively coupling) the cleaning-element-drive-assembly 132 to the cleaning element 130 or 230. The method may include configuring the cleaning-element-drive-assembly 132 to move the cleaning element 130 or 230 relative to the displaceable member 120 or 220 (e.g. relative to the outer surface 121 or 221 of the displaceable member 120 or 220).

According to various aspects, the method may include (e.g. further include) providing the material-dispensing unit 233 and the material-collecting unit 236, as part of the cleaning assembly 100, 200, or 200A. According to various aspects, the method may include (e.g. further include) providing and/or attaching the cleaning element 130 or 230 to the material-dispensing unit 233 and to the material-collecting unit 236.

According to various aspects, the method may include (e.g. further include) providing the displaceable-member-drive-assembly 125 or 225, and may include coupling (e.g. operatively coupling) the displaceable-member-drive-assembly 125 or 225 to the displaceable member 120 or 220. The method may include configuring the displaceable-member-drive-assembly 125 or 225 to drive (e.g. move or displace) the displaceable member 120 or 220 along the movement axis 128 or 228, between the first position and the second position.

According to various aspects, the method may include (e.g. further include) providing the position sensor arrangement 180 or 280 (e.g. on the mounting frame 110 or 210). The position sensor arrangement 180 or 280 may be configured to determine a position or location of the displaceable member 120 or 220 relative to the mounting frame 110 or 210.

According to various aspects, the method may include (e.g. further include) providing the material integrity sensor arrangement 282 (e.g. on the mounting frame 110 or 210). The material integrity sensor arrangement 282 may be configured to detect any discontinuity or disruption of the cleaning element 130 or 230.

The method may include (e.g. further include) providing the power source 171 configured to supply power to the connector-holding arrangement 190, to the manipulator 140 (i.e. when the manipulator is employed to link the mounting frame 110 or 210 of the cleaning assembly 100, 200, or 200A with the connector-holding arrangement 190), and/or to the cleaning assembly 100, 200, or 200A. The method may also include supplying power (e.g. from the power source 171) to the connector-holding arrangement 190, to the manipulator 140, and/or to the cleaning assembly 100, 200, or 200A.

According to various aspects, the method may include (e.g. further include) providing a controller 172 configured to control the connector-holding arrangement 190, the manipulator 140, and/or the cleaning assembly 100, 200, or 200A. In particular, the controller 172 may be configured to control movement of the connector-holding arrangement 190, the manipulator 140 and/or one or more components of the cleaning assembly 100, 200, or 200A (e.g. the displaceable member 120 or 220, any drive assembly, etc.).

The method may include (e.g. further include) providing and/or aligning a connector 90 (e.g. optical fiber connector) along (e.g. coincident with) the connector-alignment axis 198 or 298 of the connector-holding arrangement 190. That is, the connector-holding arrangement 190 may be holding the connector 90. According to various aspects, the method may include aligning the displaceable member 120 or 220 (e.g. the cleaning-surface or at least the cleaning-segment of the cleaning-surface of the displaceable member 120 or 220), including any cleaning element 130 or 230 thereon, with a tip or an end-face 91 of the connector 90. This may involve positioning the displaceable member 120 or 220 of the cleaning assembly 100, 200, or 200A over the connector 90, for example, by moving the manipulator 140 (i.e. which may be holding the cleaning assembly 100, 200, or 200A) relative to the connector 90, until the cleaning-surface or at least the cleaning-segment of the cleaning-surface of the displaceable member 120 or 220 of the cleaning assembly 100, 200, or 200A, including any cleaning element 130 or 230 thereon, is aligned (e.g. vertically aligned) with the tip or end-face 91 of the connector 90. According to various aspects, the aforesaid alignment process of the displaceable member 120 or 220 (e.g. its cleaning-surface) with the tip or end-face 91 of the connector 90 may be performed by moving the manipulator 140 (and, by extension, the cleaning assembly 100, 200, or 200A held thereby) relative to the connector-holding arrangement 190 and/or by moving the connector-holding arrangement 190 (i.e. holding the connector 90) relative to the manipulator 140. According to various aspects, the method may further employ a sensor or a camera for ensuring alignment between the displaceable member 120 or 220 and the connector 90.

According to various aspects, the method may include (e.g. further include) positioning, displacing, or moving the displaceable member 120 or 220 to the second position (e.g. from the first position) until at least the cleaning-segment of the cleaning-surface of the displaceable member 120 or 220, and any cleaning element 130 or 230 thereon, is aligned with (e.g. horizontally or laterally aligned with) and/or interfaces or engages (e.g. contacts) the connector 90 (e.g. the tip or end-face 91 of the connector 90).

The method may include (e.g. further include) moving the cleaning element 130 or 230 (i.e. that is engaged or in contact with the connector 90) relative to the connector 90 (e.g. relative to the tip or end-face 91 of the connector 90) to clean the connector 90.

According to various aspects, the method may include (e.g. further include) moving (e.g. retracting) the displaceable member 120 or 220 to the first position (e.g. from the second position) after cleaning the connector 90.

While the disclosure has been particularly shown and described with reference to specific aspects, it should be understood by those skilled in the art that various changes, modification, variation in form and detail may be made therein without departing from the scope of the present disclosure as defined by the appended claims. The scope of the present disclosure is thus indicated by the appended claims and all changes which come within the meaning and range of equivalency of the claims are therefore intended to be embraced.

To more readily understand and put into practical effect the present cleaning assembly, cleaning system, and method, they will now be described by way of examples. For the sake of brevity, duplicate descriptions of features and properties may be omitted.

### Examples

Example 1 provides an assembly (e.g. a cleaning assembly). The assembly may include a mounting frame configured to be linked with a connector-holding arrangement. The assembly may further include a displaceable member configured to support a cleaning element thereon. The displaceable member may be operatively coupled to the mounting frame in a manner so as to be displaceable relative to the mounting frame, along a movement axis, between a first position and a second position of the displaceable member. In the first position of the displaceable member, the displaceable member may be apart from a cleaning-axis of the assembly, for which the cleaning-axis may be non-parallel to the movement axis and, with the mounting frame linked with the connector-holding arrangement, the cleaning-axis may be aligned with a connector-alignment-axis of the connector-holding arrangement. In the second position of the displaceable member, the displaceable member may intersect the cleaning-axis.

Example 2 may include the system of example 1 and/or any other example disclosed herein, for which the assembly may further include the cleaning element on the displaceable member.

Example 3 may include the system of example 1 and/or any other example disclosed herein, for which the assembly may further include a drive assembly coupled to the cleaning element. The drive assembly may be configured to move the cleaning element relative to the displaceable member.

Example 4 may include the system of example 1 and/or any other example disclosed herein, for which the assembly may further include a material-dispensing unit configured to dispense the cleaning element and a material-collecting unit configured to collect the cleaning element.

Example 5 may include the system of example 4, for which the material-dispensing unit may include a first reel configured to be rotatable about a first rotational axis that is non-parallel to the movement axis, and for which the material-collecting unit may include a second reel configured to be rotatable about a second rotational axis that is parallel with the first rotational axis.

Example 6 may include the system of example 5, for which the assembly may further include a drive assembly (e.g. another drive assembly) operatively coupled to the second reel to rotate the second reel about the second rotational axis.

Example 7 may include the system of example 1 and/or any other example disclosed herein, for which the assembly may further include a drive assembly (e.g. yet another drive assembly) operatively coupled to the displaceable member to move the displaceable member along the movement axis.

Example 8 may include the system of example 1 and/or any other example disclosed herein, for which the assembly may further include a biasing element configured to exert a biasing force on the displaceable member to urge the displaceable member towards a rear end region of the assembly.

Example 9 may include the system of example 8, for which the biasing element may include or may be a spring.

Example 10 may include the system of example 1 and/or any other example disclosed herein, for which the assembly may further include an interface arrangement coupled to the mounting frame. The interface arrangement may include a power supply interface configured to be connectable to a power source and/or a communication interface configured to communicate with a controller.

Example 11 may include the system of example 1 and/or any other example disclosed herein, for which the assembly may further include a position sensor arrangement coupled to the mounting frame. The position sensor arrangement may be configured to determine a position of the displaceable member relative to the mounting frame.

Example 12 may include the system of example 1 and/or any other example disclosed herein, for which the assembly may further include the cleaning element, and a material integrity sensor configured to detect any discontinuity of the cleaning element.

Example 13 provides a system (e.g. a cleaning system). The system may include a connector-holding arrangement, a manipulator configured to be movable relative to the connector-holding arrangement, and an (e.g. at least one) assembly (e.g. cleaning assembly). The assembly may include a mounting frame coupled to the manipulator. The assembly may further include a displaceable member configured to support a cleaning element thereon, for which the displaceable member may be operatively coupled to the mounting frame and, with the manipulator positioning the mounting frame proximal (e.g. adjacent) to the connector-holding arrangement, the displaceable member may be displaceable relative to the connector-holding arrangement, along a movement axis, between a first position and a second position. In the first position of the displaceable member, the displaceable member may be apart from a connector-alignment axis of the connector-holding arrangement, the connector-alignment axis being non-parallel to the movement axis, and in the second position of the displaceable member, the displaceable member may intersect the connector-alignment axis.

Example 14 may include the system of example 13 and/or any other example disclosed herein, for which the system may further include a power source configured to supply power to the connector-holding arrangement, and/or to the manipulator, and/or to the assembly.

Example 15 may include the system of example 13 and/or any other example disclosed herein, for which the system may further include a controller configured to control a movement of the connector-holding arrangement, and/or a movement of the manipulator, and/or a displacement or movement of the displaceable member.

Example 16 provides a method. The method may include linking a mounting frame of an assembly (e.g. a cleaning assembly) with a connector-holding arrangement such that a displaceable member of the assembly, which may be operatively coupled to the mounting frame, may be displaceable relative to the connector-holding arrangement, along a movement axis, between a first position and a second position. Within the method, the displaceable member may be configured to support a cleaning element thereon. Within the method, in the first position of the displaceable member, the displaceable member may be apart from a connector-alignment axis of the connector-holding arrangement, the connector-alignment axis being non-parallel to the movement axis, and in the second position of the displaceable member, the displaceable member may intersect the connector-alignment axis.

Example 17 may include the method of example 16 and/or any other example disclosed herein, for which the method may further include coupling a drive assembly to the cleaning element, and configuring the drive assembly to move the cleaning element relative to the displaceable member.

Example 18 may include the method of claim 16 and/or any other example disclosed herein, for which the method may further include coupling a drive assembly (e.g. another drive assembly) to the displaceable member, and configuring the drive assembly to move the displaceable member along the movement axis.

Example 19 may include the method of claim 16 and/or any other example disclosed herein, for which the method may further include providing a position sensor arrangement on the mounting frame, for which the position sensor arrangement may be configured to determine a position of the displaceable member relative to the mounting frame.

Example 20 may include the method of claim 16 and/or any other example disclosed herein, for which the method may further include providing a connector along the connector-alignment axis of the connector-holding arrangement. The method may further include providing the cleaning element on the displaceable member. The method may further include moving the displaceable member to the second position such that the cleaning element on the displaceable member contacts the connector. The method may further include moving the cleaning element relative to the connector.

## Claims

1. An assembly comprising:
a mounting frame configured to be linked with a connector-holding arrangement; and
a displaceable member configured to support a cleaning element thereon;
wherein the displaceable member is operatively coupled to the mounting frame in a manner so as to be displaceable relative to the mounting frame, along a movement axis, between a first position and a second position of the displaceable member;
wherein in the first position of the displaceable member, the displaceable member is apart from a cleaning-axis of the assembly, wherein the cleaning-axis is non-parallel to the movement axis and, with the mounting frame linked with the connector-holding arrangement, the cleaning-axis is aligned with a connector-alignment-axis of the connector-holding arrangement; and
wherein in the second position of the displaceable member, the displaceable member intersects the cleaning-axis.

2. The assembly of claim 1, further comprising:
the cleaning element on the displaceable member;
preferably the assembly further comprising a drive assembly coupled to the cleaning element; wherein the drive assembly is configured to move the cleaning element relative to the displaceable member.

3. The assembly of any one of claims 1 or 2, further comprising:
a material-dispensing unit configured to dispense the cleaning element; and
a material-collecting unit configured to collect the cleaning element.

4. The assembly of claim 3,
wherein the material-dispensing unit comprises a first reel configured to be rotatable about a first rotational axis that is non-parallel to the movement axis; and
wherein the material-collecting unit comprises a second reel that is configured to be rotatable about a second rotational axis that is parallel with the first rotational axis;
preferably the assembly further comprising a drive assembly operatively coupled to the second reel to rotate the second reel about the second rotational axis.

5. The assembly of any one of claims 1 to 4, further comprising:
a drive assembly operatively coupled to the displaceable member to move the displaceable member along the movement axis.

6. The assembly of any one of claims 1 to 5, further comprising:
a biasing element configured to exert a biasing force on the displaceable member to urge the displaceable member towards a rear end region of the assembly;
preferably wherein the biasing element comprises a spring.

7. The assembly of any one of claims 1 to 6, further comprising:
an interface arrangement coupled to the mounting frame;
wherein the interface arrangement comprises:
a power supply interface configured to be connectable to a power source; and
a communication interface configured to communicate with a controller.

8. The assembly of any one of claims 1 to 7, further comprising:
a position sensor arrangement coupled to the mounting frame;
wherein the position sensor arrangement is configured to determine a position of the displaceable member relative to the mounting frame.

9. The assembly of any one of claims 1 to 8, further comprising:
the cleaning element; and
a material integrity sensor configured to detect any discontinuity of the cleaning element.

10. A system comprising:
a connector-holding arrangement,
a manipulator configured to be movable relative to the connector-holding arrangement, and
an assembly of any one of claims 1 to 9.

11. The system of claim 10, further comprising:
a power source configured to supply power to the connector-holding arrangement, to the manipulator, or to the assembly; and/or
the system further comprising a controller configured to control a movement of the connector-holding arrangement, a movement of the manipulator, or a displacement of the displaceable member.

12. A method comprising:
linking a mounting frame of an assembly with a connector-holding arrangement such that a displaceable member of the assembly, which is operatively coupled to the mounting frame, is displaceable relative to the connector-holding arrangement, along a movement axis, between a first position and a second position;
wherein the displaceable member is configured to support a cleaning element thereon;
wherein in the first position of the displaceable member, the displaceable member is apart from a connector-alignment axis of the connector-holding arrangement, the connector-alignment axis being non-parallel to the movement axis; and
wherein in the second position of the displaceable member, the displaceable member intersects the connector-alignment axis.

13. The method of claim 12, further comprising:
coupling a drive assembly to the cleaning element; and configuring the drive assembly to move the cleaning element relative to the displaceable member; and/or
the method further comprising coupling a drive assembly to the displaceable member; and configuring the drive assembly to move the displaceable member along the movement axis.

14. The method of any one of claims 12 or 13, further comprising:
providing a position sensor arrangement on the mounting frame;
wherein the position sensor arrangement is configured to determine a position of the displaceable member relative to the mounting frame.

15. The method of any one of claims 12 to 14, further comprising:
providing a connector along the connector-alignment axis of the connector-holding arrangement;
providing the cleaning element on the displaceable member;
moving the displaceable member to the second position such that the cleaning element on the displaceable member contacts the connector; and
moving the cleaning element relative to the connector.
